(19) Europäisches Patentamt
European Patent Office
Office européen des brevets

(11) EP 4 424 651 A1

(12) EUROPEAN PATENT APPLICATION

(43) Date of publication:
04.09.2024 Bulletin 2024/36

(21) Application number: 23159639.6

(22) Date of filing: 02.03.2023

(51) International Patent Classification (IPC):
C03C 17/06 (2006.01)     B23K 26/00 (2014.01)
C03B 23/20 (2006.01)     C03C 17/22 (2006.01)
C03C 17/23 (2006.01)     C03C 17/34 (2006.01)
C03C 23/00 (2006.01)     C03C 27/00 (2006.01)

(52) Cooperative Patent Classification (CPC):
C03C 23/0025; B23K 26/00; C03B 23/20;
C03C 17/06; C03C 17/225; C03C 17/23;
C03C 17/3417; C03C 27/00; C03C 2217/734;
C03C 2218/32

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicants:
• SCHOTT AG
55122 Mainz (DE)
• Schott Primoceler Oy
33720 Tampere (FI)

(72) Inventors:
• THOMAS, Jens Ulrich
55128 Mainz (DE)
• MÄÄTTÄNEN, Antti
33710 Tampere (FI)
• DAMM, Thorsten
65343 Eltville am Rhein (DE)

(74) Representative: Schott Corporate IP
Hattenbergstraße 10
55122 Mainz (DE)

(54) **BONDED SUBSTRATE ARRANGEMENT AND METHOD FOR MANUFACTURING OF SUCH AN ARRANGEMENT**

(57)    An arrangement (1) is provided comprising a first substrate (10), which is transparent in a defined wavelength range, and a second substrate (20) arranged next to the first substrate (10), wherein the first substrate (10) and/or the second substrate (20) have a coating (12, 22) formed on the side facing towards an interface between the first substrate (10) and the second substrate (20) and a first laser treated zone (50) comprising weld lines (100), wherein in the first laser treated zone (50) material of the first substrate (10) and second substrate (20) has been melted and mixed to bond the two substrates (10, 20) together. The coating (12, 22) of the first substrate (10) and/or second substrate (20) has, before laser treatment, an absorption for light within the defined wavelength range of less than 10%.

Further aspects of the invention relate to a method for manufacturing such an arrangement and the use of such an arrangement.

Fig. 8

EP 4 424 651 A1

## Description

The invention relates to an arrangement comprising a first substrate, which is transparent in a defined wavelength range, and a second substrate arranged next to the first substrate, wherein the first substrate and/or the second substrate have a coating formed on the side facing towards an interface between the first substrate and second substrate, and a first laser treated zone comprising weld lines, wherein in the first laser treated zone material of the first substrate and second substrate has been melted and mixed to bond the two substrates together. Further aspects of the invention relate to a method for manufacturing such an arrangement and the use of such an arrangement.

Hermetically sealed enclosures may be used, for example, to protect a component or components inside the enclosure from adverse environmental conditions. Applications for such a hermetically sealed enclosure can be found, for example, in electronics applications to protect sensitive electronic components, and in optical applications to encapsulate optical components. Other applications can be found, in particular, in the field of medical implants, microfluidic chips, augmented reality and sensor technology for mobility (e.g. pressure sensors).

Especially in optical applications, transparent materials for encapsulation such as glass are desirable in this context. But also, in electronic applications where wireless communication or wireless charging is desired, glass materials are advantageous over common metal housings, for example made of titanium, because these do not shield the radiation used in each case.

There are many methods to join flat glass, glass ceramic or crystalline flat pieces wafer via their interfaces, e.g. laser frit bonding, anodic bonding, contact bonding.

Further, it is principally known to stack several parts or layers on top of each other and to join them by means of laser welding. For example, European Patent EP 3 012 059 B1 shows a method for manufacturing a transparent component for protecting an optical component. A new laser welding method is used therein.

US 2015/027168 A1 discloses a method for laser welding of transparent glass sheets. To enhance the laser bond, an absorptive film is deposited at the interface between the two glass sheets, for example in the form of an absorbent coating on at least one of the glass sheets. The absorption for the welding laser in the absorptive film is at least 10%. By means of such an absorbent coating, the laser irradiation is absorbed and its power is accumulated and converted into heat that creates a melting zone between the two glass sheets and thus bonds the sheets together.

A disadvantage of this method is that the coating has to be absorbent for the wavelength of the incident laser, thus reducing the design freedom, e.g. chemical composition for homogeneous coatings or layer thicknesses for dielectric coatings.

EP 3 812 352 A1 discloses an arrangement having a substrate stack comprising a base substrate and a cover substrate, wherein a first laser weld line is used to bond the substrates together. A second laser weld line arranged next to the first laser weld line such that a stress reduction in the first laser weld line is achieved, thus improving the mechanical stability of the substrate stack. In EP 3 812 352 A1, multilayer compounds comprising multiple layers may be used as one of the substrates to be welded. Such a multilayer compound may comprise internal coating layers which, when located at an interface to be bonded to another substrate, would negatively affect the laser welding process. Further, surfaces of a substrate which form an interface during the laser bonding process may have an optical anti-reflection coating if the coating is transparent for the wavelength of the wavelength laser. For example, a substrate with a reflective coating in the visible wavelength regime may be used in a laser bonding process using a laser emitting in the near infrared wavelength range.

There is a need for an arrangement having hermetically bonded coated substrates wherein the selection of the coating is not limited to coatings being transparent for the laser used in the bonding process.

Disclosure of the invention

An arrangement comprising a first substrate, which is transparent in a defined wavelength range, and a second substrate arranged next to the first substrate is proposed, wherein the first substrate and/or the second substrate have a coating formed on the side facing towards an interface between the first substrate and second substrate and a first laser treated zone comprising weld lines, wherein in the first laser treated zone material of the first substrate and the second substrate has been melted and mixed to bond the two substrates together.

Further, the coating of the first substrate and/or second substrate has, before laser treatment, an absorption for light within the defined wavelength range of less than 10%.

The defined wavelength range in particular includes the wavelength of the laser used in the laser bonding process used to bond the first and second substrate together. Preferably, the defined wavelength range is from 800 nm to 2500 nm, especially preferred from 900 nm to 1500 nm, and most preferred from 1000 nm to 1100 nm.

The inventors have surprisingly found that the coating of the first and/or second substrate is not required to be substantially transparent for the laser used in the laser bonding process by which the material of the first and second substrate is melted and mixed to form the bond. In order to not interfere with the laser bonding process, it is sufficient that the coating is not or at least not substantially absorbing the laser light. This allows, for example, to use a coating which is highly reflective for

3    EP 4 424 651 A1    4

the wavelength range used by the bonding laser, and which is thus substantially opaque and thus non-transparent for light of the laser wavelength.

It is important to note here that a coating having only a small amount of absorption for light within the defined wavelength range, e.g. having an absorption of at most 10%, does not imply that said coating is essentially transparent having a transmission of at least 90% as this simplification does not account for reflection. Thus, the transparency T of a coating cannot be determined by only measuring the absorption A as the reflectivity R of the coating must also be considered.

Accordingly, the coating may be highly reflective within the defined wavelength range. For example, the reflection for light within the defined wavelength range may be at least 80%, preferably at least 90%, more preferably at least 95% and most preferably at least 98%.

The use of a coating with an absorption of less than 10% is in particular useful in combination with a laser bonding process wherein absorption of the energy of the laser in one of the substrates to be bonded is due to non-linear effects within the substrate as described e.g. in EP 3 812 352 A1. In such a laser welding process, a laser weld line is typically obtained by shooting a short pulsed laser beam from a laser source into the formed substrate stack with a defined wave length and energy so that a series of laser pulses is placed into the material of substrate stack. By choosing the repetition rate and a scan rate of the laser, the individual laser pulses are arranged so closely together that the resulting nonlinear absorption zone of a laser pulse within the material is in contact with a neighbouring nonlinear absorption zone of a further laser pulse, or even overlaps with it, such that heat accumulation can occur. Due to the accumulated heat, the material of the substrate stack is locally melted and a continuous welding "line" can be obtained. For creating such a continuous welding line, a focus plane of the laser beam is arranged close to but not at the interface between the first and second substrates. The laser beam is arranged at a distance $H_1$ below the interface between the two substrates such that the accumulated heat causes the material of the first and second substrate to locally melt and mix so that a hermetic bond is formed. The area, in which the accumulated heat of the incident laser causes the material of the first and second substrates to melt and to mix is designated as first laser treated zone. The material of the coating of the first and/or second substrate will typically also melt in this process and will be part of the resulting material mix. This results in the coating being effectively removed within the first laser treated zone.

Thus, in contrast to the bonding process of US 2015/027168 A1, it is not necessary to enhance absorption of the incident laser by application of an absorbent coating as the absorption occurs within one of the substrates and not within the coating. Loss of energy by reflection due to the coating can be compensated for by increasing the power of the incident laser beam.

As the absorption of the laser energy by the coating is not required to form a stable and hermetic bond between the first and second substrates, the absorption of the coating may be chosen to be much smaller than about 10%. Preferably, the absorption for light within the defined wavelength range of the coating is less than 5%, more preferably less than 1% and especially preferably less than 0.5%.

Outside of the area in which the accumulated heat of the incident laser is sufficient to locally melt the material of the first and/or second substrate, there exists a zone in which the accumulated heat is insufficient to cause the material to melt, but is sufficient to modify a material property of the coating. This area in which the accumulated heat of the incident laser causes a modification of a material property of the coating is designated as second laser treated zone.

Preferably, the arrangement has one or more second laser treated zones, wherein the coating has been selectively heat treated by heat generated within said one or more second laser treated zones. Preferably, no mixing of the materials of the first substrate and second substrate has occurred within the one or more second laser treated zones.

Such a second laser treated zone occurs in the vicinity of a first laser treated zone but can also be independently created. Second laser treated zones which are independent of first laser treated zones allow for selective heat treatment of the coating without creating a bond between the first and second substrate. For example, such an independent second laser treated zone can be obtained by arranging the focus plane of the incident laser such that a distance $H_2$ of the focus plane from the interface between the first and second substrates is larger than the height of the zone in which melting of the material occurs due to the accumulated heat.

By arranging the focus plane of the incident laser at a distance $H_3$ from a surface of a substrate such that only one of the first and second substrates is melted and thus no mixing of the materials of the two substrate occurs, but such that the coating located on the respective substrate is melted, the coating may be selectively removed. Such a zone in which the coating is selectively removed without mixing of material of the first and second substrates is designated as third laser treated zone. Such a zone may in particular be easily arranged in an area where the first and second substrate are not in direct contact with each other or where one of the first and second substrate has an opening or depression.

Preferably, the arrangement has one or more third laser treated zones in which the coating has been selectively removed by selectively melting portions of the first substrate or the second substrate, wherein no mixing of material of the first substrate and second substrate has occurred within said one or more third laser treated zones.

An advantage of the present invention is that any modification to the coating applied to the first and/or second substrate is highly localized and confined, where-

3

in the coating is removed within the first and, if present, third laser treated zone(s) and is modified by heat within the one or more second laser treated zone. Outside of said defined zones, no damage or modification of the coating and its properties occurs.

The laser treated zones are highly localized and have a typical width in the range of from 20 $\mu$m to 80 $\mu$m in case of a first laser treated zone, a width in the range of from 30 $\mu$m to 300 $\mu$m in case of a second laser treated zone and a width in the range of from 0.5 $\mu$m to 80 $\mu$m in case of a third laser treated zone. The shape of the zones can be customized as required, wherein in particular continuous lines and individual spots are possible by scanning a laser beam over the substrate stack comprising the first and second substrate.

The coating of the first substrate and/or second substrate may have at least one property selected from transmissivity, reflectivity, absorbance, color, electrical conductance, optical phase retardance, roughness, hardness and surface tension, which is affected by the heat treatment within the one or more second laser treated zones.

By selectively arranging one or more second laser treated zones, the coating can be structured independently from the placement of laser weld lines which bond the first and second substrates together. This allows the arrangement of complex structures and/or patterns.

For example, if a coating has an electrical conductivity which is modified by heat treatment within one or more second laser treated zones, it is possible to form an antenna structure suitable for receiving and/or transmitting RF signals or suitable for wireless charging, a heating structure, an electrode structure for detecting or creating an electric field, electrical pathways on the first and/or the second substrate. The pattern or structure of the coating can be formed independently from the bonding of the two substrates by arranging one or more second laser treated zones and/or third laser treated zones. Further, it is of course possible to combine several of the mentioned examples. The pattern or structure may be part of a sensor. For example, a structure for creating and detecting electric fields may be configured and arranged to detect moisture or the PH value when immersed in a liquid.

If a coating is an optical reflective coating or anti-reflective coating, in particular for visible light, for near infrared light and/or UV and wherein the reflectivity of the coating is modified within at least one of the one or more second laser treated zones, it is possible to form a pattern of coated and non-coated areas, which can serve as, an alignment structure or fiducial, label (e.g. a barcode or a OR-code) or even with sufficient resolution as diffraction grating structure,.

As used herein, UV range is from 200 nm to 380 nm, visible light or the VIS range is from 380 nm to 690 nm and the near infrared or NIR range is from 690 to 2500 nm.

The heat affected zone and thus a second laser treated zone when performing the laser welding process to bond the two substrates together surrounds the weld line and thus the first laser treated zone and extends about 300 $\mu$m away from the weld line. Thus, the first laser treated zone of the coating is confined to an area close to the weld lines and has a width $w_m$. Areas having a typical minimum distance of 500 $\mu$m from a weld line are not affected by the heat treatment.

A width $w_{haz}$, which includes the widths of the first laser treated zone and the widths of the two neighboring second laser treated zones corresponds to the widths of the heat affected zone at the surface of the substrate and thus at the coating. Preferably, the laser process is carried out such that a ratio $w_{haz}/w_m$ is larger than 1 and preferably less than 10, less than 5, less than 3, less than 2 and most preferably less than 1.5.

When a third laser treated zone is created, wherein the laser focus is away from the material interface and thus located further away from the coating, the zone in which the material is melted can be controlled even more precisely to selectively remove the coating and create fine, sharp patterns. A typical minimum feature size of such a pattern is 0.5 $\mu$m.

Conventional bonding processes, such as anodic bonding or gluing cause damage or modification of the properties of the coating over a wide range much larger than the typical structure sizes mentioned herein for the proposed highly localized structuring and/or modification of the coating by a laser process. Common bonding methods like fusion bonding need to heat up the whole sample to a temperature in the range of 400°C to 600°C, a temperature at which many optical coatings can degrade. Epoxy and glass frit bonding usually damage the coating at the areas where the epoxy glue or glass frit lines touch the coating. Those line thicknesses range from 500 $\mu$m up to several mm in width.

The arrangement may further comprise an inner coating which is arranged on inner walls not facing towards the interface between the first substrate and second substrate, in particular on sidewalls of a cavity. Accordingly, such an inner coating is arranged on a wall or surface which is not parallel to the interface between the first and second substrate. In particular in case a cavity is formed, the sidewalls may be arranged perpendicular to the interface between the first and second substrates.

The inner coating is preferably selected such that it has light absorbing or light reflecting properties. Such an inner coating may be combined with a structuring of the respective surface, in particular a structuring to increase a surface roughness. For example, the light absorbing properties of a light absorbent coating may be further enhanced by combining such an absorbent coating with a rough surface.

Preferably, the surface of the inner coating has an arithmetic average roughness between 0.05 $\mu$m and 2 $\mu$m, more preferably between 0.1 $\mu$m and 1 $\mu$m, most preferably between 0.2 $\mu$m and 0.5 $\mu$m.

The coating of the first substrate and/or the second substrate may be configured as a single layer or as a multi-layer structure. The single layer or at least one layer of the coating is preferably configured as an inorganic layer. An example for such an inorganic layer is a metal layer, a nitride layer, or an oxide layer. Suitable examples for oxide layers include, ITO, AZO, $SiO_2$, $Al_2O_3$, $TiO_2$, $HfO_2$, $Ta_2O_5$, $ZrO_2$, $Nb_2O_5$. Examples for suitable nitride layers include $Si_3N_4$ and AlN.

Suitable examples for metal and/or semiconductor layers include Ti, Si, Mo, W, Zr, Al, Cu, Nb, Ta and Cr.

Further, different materials and in particular different types of materials may be combined, either in a single layer or in multiple layers. For example, different oxides or nitrides or even mixtures of nitrides and oxides may be used.

For optical coatings such as reflective or anti-reflective coatings, at least two different dielectric materials having different refractive indices are combined in a multi-layer structure. Such a structure may in particular have alternating layers of a material having a high refractive index and a material having a low refractive index, wherein typically a high refractive index (for light of 550 nm) is grater or equal to 1.7 and a low refractive index is less or equal to 1.5.

In order to ensure that the coating has a low light absorption within the defined wavelength range, materials having a low extinction coefficient k are preferred as coating for the first and/or second substrate. Materials having an extinction coefficient $<= 1 \cdot 10^{-3}$ are particularly preferred.

For example, an anti-reflective or reflective coating may be based on $TiO_2$ and $SiO_2$. In case of an anti-reflective coating, it consists of, for example, four layers, starting with the high index material. In case of $TiO_2$ and $SiO_2$, a sequence of 23 nm $TiO_2$, 34 nm $SiO_2$, 37 nm $TiO_2$, and 100 nm $SiO_2$ is suitable to act as an anti-reflective coating. The average reflectance of a glass substrate between 450 nm - 650 nm is reduced to below 0.5%. Since the extinction coefficient of $SiO_2$ equals 0 in the VIS wavelength range, and the extinction coefficient of the $TiO_2$ is < 1.9E-4 for $\lambda$>550 nm, the average absorptance of the coating is <0.05%.

An example for a conductive coating is indium tin oxide (ITO). When heat treated, the conductivity and thus also the electrical resistance is modified.

An example for a coating which changes color, and thus in particular changes optical properties within the VIS light range is an anti-reflective coating for the IR range. Such a coating has - when viewed with the eye in its undamaged state - a purple reflection (e.g. placed before a black background), while yielding a green color in transmission (e.g. placed before a white background). When the glass interface or the glass interfaces carrying this coating are heated close to or beyond their softening point, the coating properties can be permanently altered. This can be by damaging or removing one or more layers, by introducing color or absorption centers and or changing the density of one or more layers or other effects causing a permanent or longer lasting modification of the coating. These effects can then lead to modified spectral response in the VIS range, e.g. a discoloration.

In principle, the same materials and structures are also suitable for the inner coating. However, in case of an inner coating, materials having a high extinction coefficient may be preferred if an absorbent property is desired.

The inner coating may have a thickness between 5 nm and 5 $\mu$m, preferably between 15 nm and 1000 nm, more preferably between 50 nm and 500 nm.

In embodiments of the invention having an inner coating with light absorbing properties, the coating may comprise at least one of the following materials: $Al_2O_3$, $B_2O_3$, $Co_2O_3$, $Cr_2O_3$, CuO, $Fe_2O_3$, $Ga_2O_3$, $HfO_2$, $In_2O_3$, MgO, $Nb_2O_5$, NiO, Pd, Pt, Al, Ag, Mo, W, Si, $SiO_2$, $SnO_2$, $Ta_2O_5$, $TiO_2$, TaNx, (Ta,Al)N, $TiCrO_x$, (Ti,Al)N, (Ti,Al)C, TiC, AlC, AlN, TiN, $VO_2$, WOs, ZnO, (Al, Zn)O, ZnS, ZnSe, $ZrO_2$, Rare earth (RE) oxides, $Sc_2O_3$, $Y_2O_3$, Carbon, Carbon black, $Ca_{10}(PO_4)_6(OH)_2)$, Polyimides, PMDA-ODA, PMDA-DAH, 3-aminopropyltrimethoxysilane coupling agent.

The coating and/or the inner coating may be applied using any known deposition technique. Examples for suitable deposition methods include Physical Vapor Deposition (PVD), especially sputtering, Chemical Vapor Deposition (CVD), especially thermal CVD, Plasma Enhanced CVD, and Atomic Layer Deposition (ALD).

The arrangement may be configured such that a hermetic enclosure is formed, wherein a cavity or function zone is enclosed within such an enclosure. As used herein, hermetically sealed means in particular an enclosure that has a helium leakage rate of less than $1 \cdot 10^{-8}$ mbar·l/sec and is preferably in the range $1 \cdot 10^{-10}$ mbar·l/sec to $1 \cdot 10^{-9}$ mbar·l/sec.

For example, the first substrate of the arrangement may be configured as a cover substrate and the second substrate may be configured as a base substrate wherein the two substrates form an enclosure for a cavity or a function zone. In this example, the base substrate may have a depression, e.g. formed by etching, to define the cavity.

In a further example, the arrangement additionally comprises a further substrate, wherein the first substrate is configured as a cover substrate, the second substrate is configured as an intermediate substrate and the further substrate is configured as a bottom substrate, and wherein the three substrates form an enclosure for a cavity or a function zone. In this example, a bond between the second substrate and the further substrate may be executed in the same manner as the bond between the first substrate and the second substrate and the further substrate may have a coating arranged on the side facing towards the interface between the second substrate and the further substrate.

In case the arrangement comprises a cavity or a function zone, it is preferred that the first laser treated zone completely surrounds the cavity or function zone, wherein preferably a bond between the first substrate and the second substrate formed within the first laser treated zone is hermetic. If the arrangement comprises a further substrate, it is preferred that the bond between the second substrate and the further substrate is likewise hermetic and includes a first laser treated zone that surrounds the cavity or functional zone. The arrangement may of course comprise more than one cavity or function zone. In such a case it is preferred that all of the cavities and/or function zones are completely surrounded by a first laser treated zone so that each of the cavities and/or function zones is hermetically enclosed within the arrangement. After forming such an arrangement having multiple cavities or functional zones it is possible to cut the arrangement to separate said cavities or functional zones and thus obtain multiple parts out of a single bonded substrate stack.

Preferably, the first substrate and/or, if present, the further substrate, is selected from a glass, a glass-ceramic, silicon, sapphire, diamond or other inorganic crystals.

Preferably, the second substrate is selected from a glass, in particular a volume absorbing glass, a glass-ceramic, silicon, sapphire, diamond, other inorganic crystals, a plastic material and a metal or a metal alloy.

Suitable examples for the volume absorbing glass include in particular optical filter glass.

In a further aspect of the invention, a method for manufacturing of the herein described arrangement is provided. Accordingly, all features described with respect to the arrangement apply to the method and vice versa all features which will be described with respect to the method apply to the arrangement.

A method for manufacturing an arrangement of at least two connected substrates is proposed.

In a first step, a first substrate and a second substrate are provided and a substrate stack is formed, wherein at least one of the first substrate and the second substrate has a coating arranged on a side facing towards an interface between the first substrate and second substrate.

In a subsequent step, a first laser treated zone for bonding the first substrate and the second substrate is formed by means of laser welding, wherein at least the first substrate is transparent for the laser, and wherein the coating, before laser treatment, has an absorption for the welding laser light of less than 10%, and wherein the first laser treated zone is formed by introducing at least one laser weld line, wherein in the first laser treated zone material of the first substrate and the second substrate is melted and mixed to bond the first substrate and the second substrate together.

In subsequent optional steps, a second laser treated zone is formed to selectively heat treat the coating, wherein a property of the coating is modified, and/or a third laser treated zone is formed to selectively remove the coating, wherein no mixing of material of the first substrate and second substrate occurs.

In further optional steps, a further substrate may be provided and can be arranged next to the second substrate. A bond and optional structuring of a coating can be performed as described with respect to the first and second substrates.

The method is particularly suitable for manufacturing one of the arrangements described herein, Wherein the defined laser wavelength range is chosen such that said defined wavelength range comprises the wavelength of the welding laser.

The at least one laser weld line is preferably made using an ultrashort pulse laser. Typical pulse widths are in the range of 100 fs to 100 ps. A method for carrying out such a welded joint with one or more laser welding lines is known, for example, from EP 3 012 059 B1.

The method may comprise a further examination step to be carried out after one or more first laser treated zone(s) is/are formed for assessing the quality of the formed bond within the first laser treated zone.

Preferably, the coating is selected such that the coating changes color when heat treated. In such a configuration, the substrate stack has a first observed color within areas or zones in which the coating has not been treated, has a second color within areas or zones in which the coating has been heat treated and has a third color when the coating has been removed by laser treatment. In the examination step, weld line interruptions and/or weld line inhomogeneities in the at least one laser weld line are identified by detecting the color change of heat-treated coating or the presence of untreated coating along the intended laser weld line.

Additionally or alternatively, the coating is selected such that electrical conductivity changes when heat treated. For example, the coating may have a first conductivity when untreated, a second conductivity when heat treated and no electrical conductivity when removed by laser treatment. In the examination step, weld line interruptions and/or weld line inhomogeneities in the at least one laser weld line are identified by measuring the electrical resistance between the coating within an inner zone or functional zone and a part of the coating outside of said zone. For example, if the weld line is to completely surround an inner zone defining a cavity or a functional zone, no electrical continuity should be present if the weld line is free from interruptions. If current flow is detected, at least one gap in the weld line is present.

A further aspect of the invention relates to the use of the arrangement described herein as an enclosure or as a cap for a medical implant or a sensor.

In case the arrangement is configured as a cap, the cap may be configured to be bonded to a base to form a housing for a component or a device. In particular, the cap is preferably configured to be bonded to a substrate or a header to form a housing. The formed housing is preferably hermetic and in particular suited for receiving a component such as an electronic or optoelectronic component. The housing comprises surfaces formed by the first and/or second substrate and comprises the coating applied to said first and/or second substrate and may additionally comprise an inner coating. The arrangement of the substrates and the coating of the first and/or second substrate and the inner coating may be chosen such that the formed housing has a top wall being opaque and one or more anti-reflection coated side walls. Alternatively, the top wall may be configured to be transparent and the side walls may be opaque.

It is understood that the above-mentioned features and those to be explained below can be used not only in the respective combination as shown, but also in other combinations or on their own, without leaving the scope of the present invention.

Preferred embodiments of the invention are shown in the figures and will be explained in more detail in the following description, wherein identical reference numerals refer to identical or similar components or elements.

Brief description of the figures:

The figures show in schematic form

Figure 1     a schematic top view of a first exemplary arrangement of bonded stacked substrates,

Figure 2     a cross-section side view of the arrangement of Figure 1,

Figure 3     an enlarged cross-section view of a bond between two substrates,

Figure 4     an enlarged top view on a bond between two substrates,

Figure 5     an enlarged cross-section view of a substrate having a modified coating,

Figure 6     an enlarged top view of a substrate having a modified coating,

Figure 7     a schematic top view of a second exemplary arrangement having an antenna structure,

Figure 8     an enlarged cross-section view of the arrangement of Figure 7,

Figure 9     an enlarged photograph of two weld lines viewed from the top,

Figure 10     a further example of a third exemplary arrangement comprising two substrates,

Figure 11     a cross-section view of a fourth exemplary arrangement,

Figure 12     a cross-section view of a fifth exemplary arrangement, and

Figure 13     a cross-section view of cap cut out of the arrangement of Figure 12.

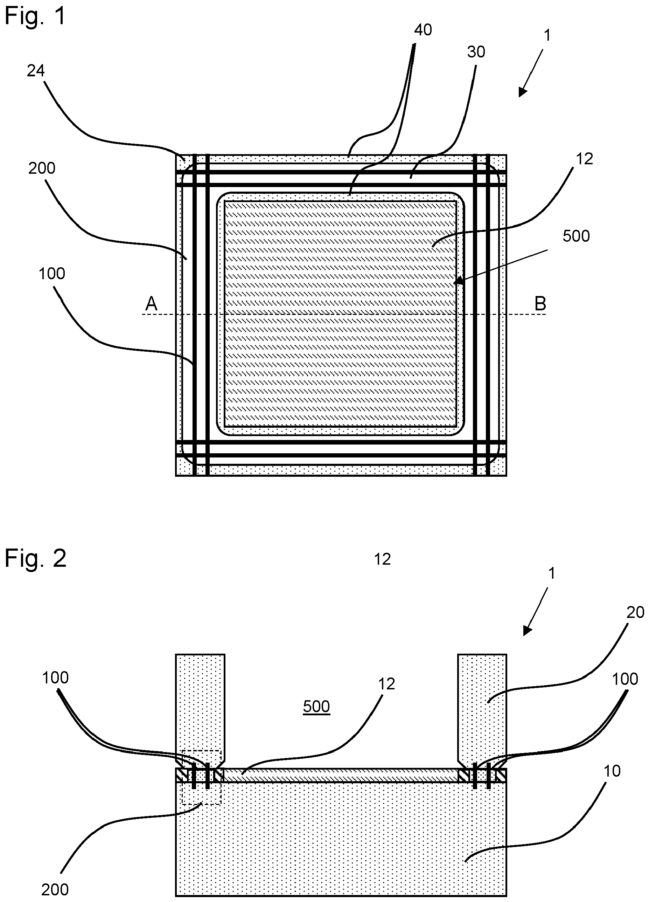

Figure 1 shows a first exemplary arrangement 1 of two bonded stacked substrates 10, 20 (see figure 2) in a schematic top view. In the depicted example, the surface of a first substrate 10 that is facing towards a second substrate 20 is covered with a coating 12.

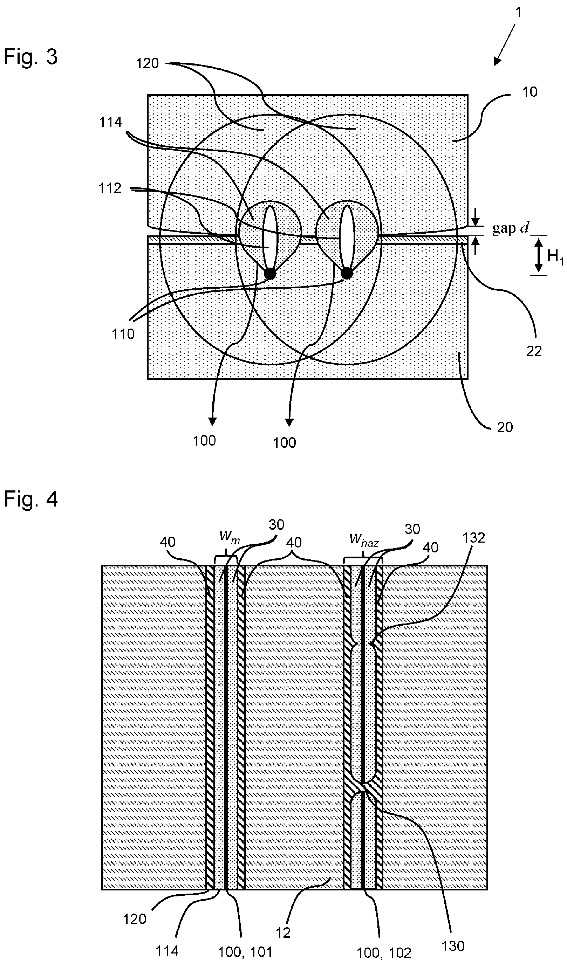

In order to securely and hermetically bond the first substrate 10 to the second substrate 20, laser weld lines 100 are arranged with a contact area 200 of the two substrates 10, 20. Within said contact area 200, a remaining gap between the two substrates 10, 20, see figure 3, is smaller than about 250 nm. For the hermetical bond between the two substrates 10, 20 within said contact area 200, the laser weld lines 100 are introduced by melting the material of the first substrate 10 and the second substrate 20 using an ultrashort pulse laser and cooling the resulting mixed material down again, so that the two substrates 10, 20 are joined together. The width of the laser weld lines 100 is typically in the range of approx. 20 $\mu$m to 75 $\mu$m.

As can be seen in figure 1, the bond lines 100 surround a space defining a cavity 500. Further, figure 1 shows that within a first laser treated zone 30, which comprises the welds lines 100, the coating 12 has been removed. In an adjacent second laser treaded zone 40, the original coating 12 has been modified by heat introduced by the laser, but the coating 12 is still present.

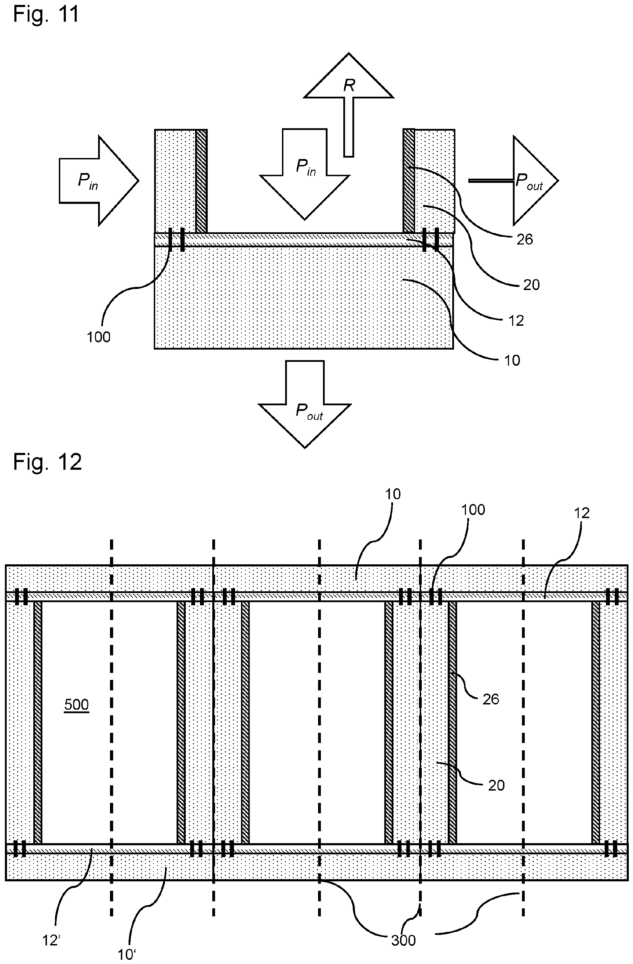

Figure 2 shows a schematic cross-sectional side view of the arrangement 1 of figure 1 along the line marked AB. In this side view, it can be seen that the first substrate 10 is configured as a solid base substrate and that the second substrate 20 is configured as a spacer substrate. The two substrates 10, 20 define a cavity 500, wherein the first substrate 10 defines a base wall und the second substrate defines side walls. The coating 12 is arranged on the side of the first substrate 10 facing towards the second substrate 20 and is arranged over the entire surface of the first substrate 10. In order to fully close the cavity 500, a further substrate 10', see Figure 12, can be bonded to the open side of the second substrate 20.

The interface between the two substrates 10, 20 and the bonding by means of the laser weld lines 100 will be described with respect to figure 3.

Figure 3 shows an enlarged cross-sectional side view of a bond between two substrates 10, 20. In the example depicted in figure 3, the first substrate 10 is uncoated and only the second substrate 20 has a coating 22 located on the side facing towards the first substrate 10.

In figure 3, a cross-section of two weld lines 100 is visible. The weld lines 100 are formed by multiple laser pulses which overlap such that heat may accumulate within the substrates 10, 20. The region which is affected by the laser pulses is pear-shaped and represents the area of the substrates 10, 20 that has been processed by the respective laser pulse in such a way that the material has been heated above the glass transition temperature $T_G$ or the melting temperature and the respective adjacent substrates 10, 20 can join together in a material bond if a gap d is less than about 250 nm. Most of the energy of a laser pulse is absorbed within an absorption zone 110 which is located at the focal plane of the laser and within which light is absorbed due to non-linear effects. The focal plane is arranged at a first depth $H_1$ measured from the surface of the first substrate 10 including its coating. The light absorbed within the absorption zone 110 causes the material to melt within a melted zone 114. Within the melted zone 114, elongated volumes with locally lower material densities or even gas enclosures can occur periodically or aperiodically along the weld line. In the cross section, we denote this zone as "bubble-shaped" zone 112.

The melted zone 114 with the included elongated bubble-shaped zone 112 can usually clearly be identified, e.g., with a light microscope, since its density and thus the refractive index has changed with respect to the surrounding glass. A heat affected zone 120 surrounds the melted zone 114 and indicates and area which is heated, but the accumulated heat is not sufficient to melt the material.

Portions of the coating 22 of the second substrate 20 located within the melted zone 114 will be effectively removed from the surface of the first substrate 20 as its material mixes with the molten material of the first substrate 10 and the second substrate 20. The area of the interface between the first and second substrates 10, 20 located within said melted zone 114 is referred to as a first laser treated zone.

Portions of the coating 22 of the second substrate 20 located outside the melted zone 114 but within the heat affected zone 116 are not removed, but are subject to heat from the laser. If the coating 12 is chosen appropriately, the heat can be used to selectively modify a property of the coating 22. This heat treated portion of the coating 22 is referred to as a second laser treated zone.

Figure 4 shows two parallel weld lines 100 used to bond two substrates 10, 20 together, wherein at least one of the two substrates 10, 20 has a coating 12, 22. As can be seen in the top view of figure 4, each of the laser weld lines 100 has a first laser treated zone 30 having a width which corresponds to a width $w_m$ of the melted zone 114, see figure 3, which comprises the respective laser weld line 100 and in which the coating 12, 22 has been effectively removed. Additionally, each of the first laser treated zones 30 is surrounded by second laser treated zones 40 in which heat of the laser pulses has modified the coating 12, 22. The width of the surrounding second laser treated zones 40 including the width of the first laser treated zone 30 corresponds to the total width $w_{haz}$ of the heat affected zone 116, see figure 3.

In the example of figure 4, the coating 12, 22 of the first substrate 10 and or the second substrate 20 has been chosen to have a first color in an untreated state and to have a second color in a heat treated state. Further, the coating 12, 22 is chosen such that the color of the formed substrate stack is different from the first and second color in first laser treated areas 30 in which the coating 12, 22 has been removed. This allows easy identification of interruptions or gaps 130 within a laser weld line 100 or irregularities 132 in which a width of a laser weld line 100 is different from a set value. This is particularly useful in cases where perfect hermeticity is required as an imperfect laser weld line 100 which could allow leakage in or out of a cavity 500 can be easily identified by simple optical inspection. Thus, in the depicted example it can be easily determined that a first weld line 101 is uninterrupted and free from inhomogeneities 132, wherein a second weld line 102 has a gap 130 and an inhomogeneity 132 with reduced width.

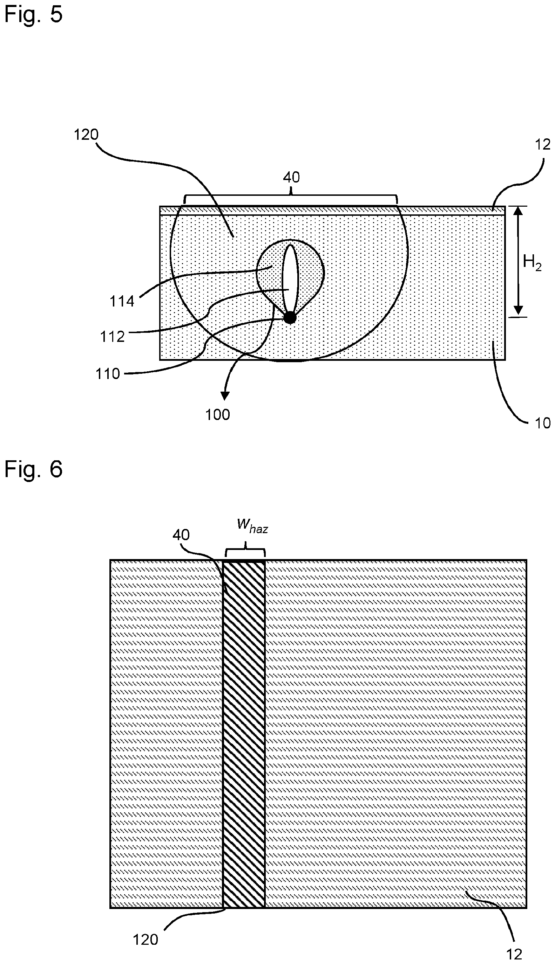

Figure 5 shows the modification of the properties of a coating 12, 22, wherein in the depicted example a coating 12 is located on a first substrate 10. In the depicted section of the first substrate 10, the first substrate 10 is not in contact with the second substrate 20. For example, in an arrangement 1 similar to the one depicted in figures 1 and 2, the portion of the first substrate 10 depicted in figure 5 could correspond to a portion of a bottom wall of the cavity 500.

For modification of the properties of a coating 12, 22, it is desired to subject the coating 12, 22 to heat, but not to melt the coating 12, 22 or the portions of the substrate 10, 20 which carry said coating 12, 22. Thus, a focus plane in which the absorption zone 110 is located, is moved deeper into the substrate 10 and has a second depth $H_2$ measured from the surface including the coating 12. The melted zone 114 is then completely embedded within the substrate 10 and is not touching the surface of the substrate 10 or the coating 12. Only the heat affected zone 114 reaches the coating 12 so that the portion of the coating 12 located within the heat affected zone 114 is heat treated. This zone is referred to as a second heat treated zone 40. A second heat treated zone 40 as depicted in figure 5 can be used to structure the coating 12 independently from a first laser treated zone 30 as depicted in figures 3 and 4. By scanning the laser pulses over the substrate 10 in a similar manner as for creating the laser weld lines 100, the coating 12 can be structured or patterned.

Figure 6 shows a top view of a substrate 10 having a coating 12 which has been modified by heat treatment within a second laser treated zone 40. In the depicted case, the second laser treated zone 40 has a line shape having a width $w_{haz}$ corresponding to the width of the heat affected zone 120 created during the laser processing.

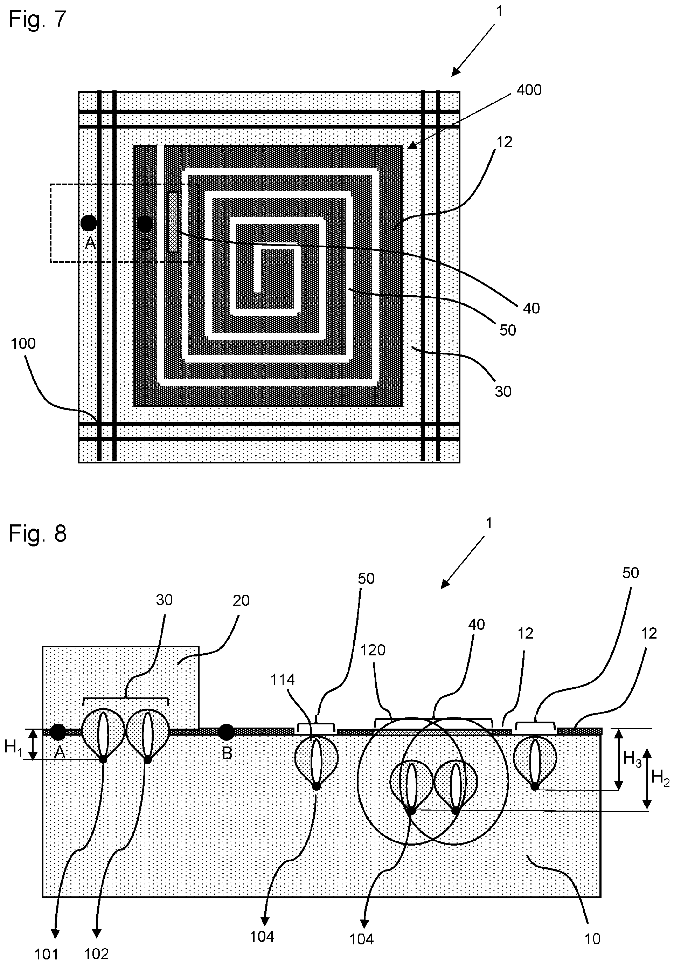

Figure 7 shows a schematic top view of a second exemplary arrangement 1 having an antenna structure 400.

The arrangement 1 depicted in figure 7 comprises a substrate stack having a first substrate 10 and a second substrate 20 similar to the one described with respect to figures 1 to 4. The coating 12 located on the side of the first substrate 10 facing towards the second substrate 20 is an electrically conductive coating such as an indium tin oxide (ITO) coating. The materials of the substrates 10, 20 are in this case chosen such that they are electrically non-conductive.

In a first laser treated zone 30 comprising the weld lines 100, the coating 12 has been effectively removed so that there is no conductive path from an area located inside a space defined by the weld lines 100 to the outside. For example, there is no continuity between a point A located outside the defined space and a point B located inside the defined space. The remaining coating 12 within the defined space has been structured in a coil-like manner by preparing a third laser treated zone 50, in which the coating 12 is effectively removed, but no bond between the first substrate 10 and the second substrate 20 is formed.

Further, it is possible to influence the electrical resistance of the coating 12 by heat treatment within a second laser treated zone 40. The coating 12 within said second laser treated zone 40 is not removed, but modified by heat so that the electrical conductivity is adjusted.

Figure 8 shows an enlarged cross-section view of the arrangement 1 of figure 7. From the side view of figure 8 it can be seen that the second substrate 20 is configured as a spacer defining side walls and is not covering the entire surface of the first substrate 10 with the coating 12. In a contact area, where the first substrate 10 with coating 12 is in direct contact with the second substrate 20, two weld lines 100 are arranged in parallel, a first weld line 101 and a second weld line 102. The heat introduced by the two weld lines 100 forms a first laser treated zone 30 in which material of the first substrate 10, the coating 12 and the second substrate 20 is molten and mixes to form a hermetic bond between the two substrates 10, 20. The material of the coating 12 is part of the material mixture, which effectively removes the coating 12 from the surface of the first substrate 10. As can be seen in figure 8, the focus plane for forming the first laser treated zone 30 is located at a first depths $H_1$. This depth is chosen such that the molten zone 114 created by the laser reaches from the lower first substrate 10 into the upper second substrate 20.

In a second laser treated zone 40, the coating 12 is not removed, but its properties are altered by the heat affected zones 120 caused by additional laser lines 104 located at a second depth $H_2$ from the surface of the first substrate 10. In case of a conductive ITO coating as coating 12, the electrical resistance is increased within the second laser treated zone 40 so that a resistor is formed by the selective laser treatment.

In a third laser treated zone 50, the coating 12 is effectively removed without bonding the first substrate 10 to the second substrate 20. This is achieved by forming a third laser treated zone 50 in which the melted zone of a further laser weld line 104, arranged at a third depth $H_3$, touches the surface of the first substrate 10 and thus causes melting of the coating 12. The molten material of the coating 12 within said third laser treated zone 50 mixes with molten material of the first substrate 10 and is thus effectively removed from the surface of the first substrate 10. As the first substrate 10 is in this case electrically insulating, a non-conductive structure is thereby formed.

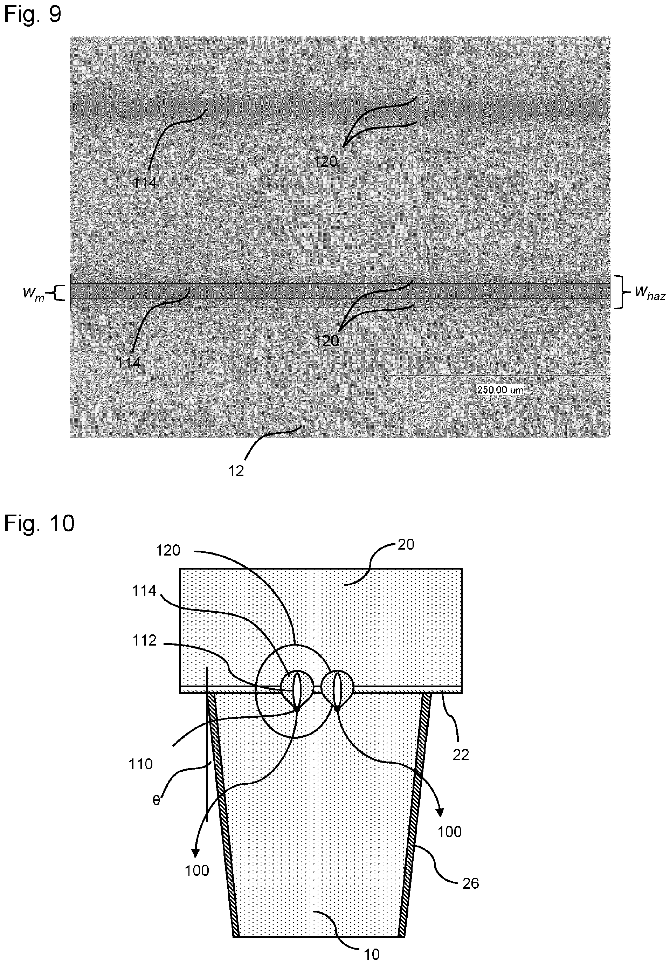

Figure 9 shows an enlarged photograph of two laser weld lines 100 viewed from the top, wherein one of the substrates 10, 20 of the formed substrate stack has a coating 12, 22 on the side facing towards the other one of the substrates 10, 20. The coating is, in the depicted example, a broadband IR coating, that exhibits a yellow-brownish tint in the VIS, when illuminated from the top.

Within the melted zone 114, the coating 12, 22 has been completely removed by the melt pool of the material molten by the laser. Illuminated from the top, as shown in the picture shown in figure 9, this area appears darker than the intact, untreated coating area, since it does not reflect anymore. Most notable, no Fresnel-Reflection occurs here either, since there is no airgap between the two substrates 10, 20.

Within the heat affected zone 120 surrounding the melted zone 114, a continuous color change gradient with respect to the non-affected coating can be observed. In this example, this color change is attributed to the heat dependent permanent change of layer thickness, which becomes stronger the closer to the melting zone 114.

The heat affected zone 120 extends symmetrically from the melted zone 114. Its width $w_{haz}$ is at least equal the width of the melt zone $w_m$ and preferably fulfills the condition $1 < w_{haz}/w_m < 10$. In the picture shown in figure 9, $w_m$ is 17 $\mu$m and Whaz is 35 $\mu$m.

Figure 10 shows a further example of a third exemplary arrangement 1 comprising two substrates 10, 20. In the depicted example, the first substrate 10 is configured as a spacer and does not cover the entire surface of the second substrate 20. The second substrate 20 has a non-absorbent coating 22 located on the surface facing towards the first substrate 10. In this example, the coating 22 is configured as an anti-reflection coating to enhance light transmission form the second substrate 20 into the first substrate 10 and vice versa.

The first substrate 10 has an inner coating 26 located on side walls which are not parallel to the interface between the two substrates 10, 20, but arranged at an angle θ with respect to a surface normal of the interface plane. The inner coating 26 is in this example a light absorbent coating. Two weld lines 100 are used in this example to bond the two substrates 10, 20 together, wherein the coating 22 is effectively removed within the melted zones 114 and is modified within the heat affected zones 120.

The arrangement 1 of figure 10 can, for example, be used to form light conductive structures, wherein the structure is shielded from stray light by means of the inner coating 26 and internal transmission is enhanced by the coating 22.

Figure 11 shows a cross-section view of a fourth exemplary arrangement 1 configured as a cap having a top or bottom formed by a first substrate 10 and side walls formed by a second substrate 20.

The coating 12 of the first substrate 10 is in this example configured as an anti-reflection coating and the inner coating 26 located on side walls of the second substrate 20 is configured as an absorbent coating. The two substrates 10, 20 are hermetically bonded to each other by means of bond lines 100 to form a cap-like structure.

The cap is highly transparent in a first direction so that light can easily pass through the top or bottom of the cap, and is highly absorbent in a second direction so that nearly all light is blocked passing through the side walls. Such an arrangement is in particular useful for many optical devices, e.g. sensor packages, that aim to reduce stray-light.

It is important to note that we regard coating absorption A, which is not equal to transparency T, since the reflectivity R of the coating has also to be considered:

$$T = P_{out}/P_{in} = 1 - R - A < 1 - A$$

As can be seen from figure 11, the transmission T defined by $P_{out}/P_{in}$ is high for a direction perpendicular to the plane of the coating 12 of the first substrate and is low for a direction perpendicular to the plane of the inner coating 26 of the second substrate.

Most important is the transmission T of light perpendicular to the coating 12. Here it is surprising that it is possible to use coatings 12 that absorb less than 10%, 5%, 1%, 0.5% in this direction. This is contrary to common knowledge that for a good laser bond that is assisted by a coating, it is required to have the coating layer to absorb at least 10% of the incident laser light.

Figure 12 shows a cross-section view of a fifth exemplary arrangement 1. In this example, several cap-like elements are produced simultaneously by stacking large wafers as substrates 10, 10', 20 on top of each other and subsequently separating the individual caps by dicing along dicing lines 300.

In the depicted example, a first substrate 10 is first bonded to a second substrate 20 configured as spacer. In a subsequent step, this intermediate stack is bonded to a further substrate 10'. The first substrate 10 and the further substrate 10' are each provided with a coating 12, 12' which is in this example configured as anti-reflection coating. Side walls of the second substrate 20 are coated with an inner coating 26 which is in this example configured as a light absorbent coating. Before dicing, multiple cavities 500 are formed.

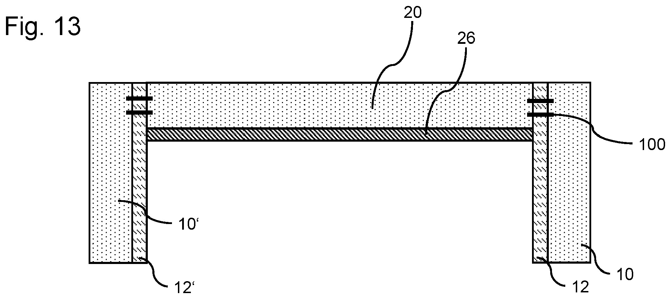

Figure 13 shows a cross-section view of cap cut out of the arrangement 1 of Figure 12.

The arrangement 1 of figure 13 has been obtained by dicing the substrate stack of figure 12 along the indicated dicing lines 300. The resulting arrangement 1 is similar to the arrangement 1 as shown in figure 11, but has highly transmissive side walls and an opaque top or bottom wall.

Although the present invention has been described with reference to preferred examples of embodiments, it is not limited thereto but can be modified in a variety of ways.

List of reference numerals

| 1 | arrangement |
| 10 | first substrate |
| 10' | further substrate |
| 12 | coating of first substrate |
| 12' | further coating |
| 20 | second substrate |
| 22 | coating of second substrate |
| 24 | underside of second substrate |
| 26 | inner coating |
| $\theta$ | wall tilt angle |
| 30 | first laser treated zone |
| 40 | second laser treated zone |
| 50 | third laser treated zone |
| 100 | weld line |
| 101 | first weld line |
| 102 | second weld line |
| 104 | additional laser line |
| 110 | absorption zone |
| 112 | elongated bubble |
| 114 | melted zone |
| 120 | heat affected zone |
| 130 | weld line interruption |
| 132 | weld line inhomogeneity |
| 200 | contact area |
| 300 | dicing line |
| 400 | antenna structure |
| 500 | cavity |
| $H_1, H_2, H_3$ | depth of laser focal plane |
| d | gap between substrates |
| $w_m$ | width of melted zone |
| $w_{haz}$ | width of heat affected area |

**Claims**

1. Arrangement (1) comprising a first substrate (10), which is transparent in a defined wavelength range, and a second substrate (20) arranged next to the first substrate (10), wherein the first substrate (10) and/or the second substrate (20) have a coating (12, 22) formed on the side facing towards an interface between the first substrate (10) and the second substrate (20) and a first laser treated zone (50) comprising weld lines (100), wherein in the first laser treated zone (50) material of the first substrate (10) and second substrate (20) has been melted and mixed to bond the two substrates (10, 20) together, **characterized in that** the coating (12, 22) of the first substrate (10) and/or second substrate (20) has, before laser treatment, an absorption for light within the defined wavelength range of less than 10%.

2. Arrangement (1) according to claim 1, wherein the absorption for light within the defined wavelength range is less than 5%, preferably less than 1% and especially preferably less than 0.5%

3. Arrangement (1) according to any one of the previous claims, **characterized in that** the coating (12, 22) has been selectively heat treated by heat generated in one or more second laser treated zones (40).

4. Arrangement (1) according to claim 3, characterized no mixing of the material of the first substrate (10) and second substrate (20) has occurred within the one or more second laser treated zones (40).

5. Arrangement (1) according claim 3 or 4, wherein the coating (12, 22) of the first substrate (10) and/or second substrate (20) has at least one property selected from transmissivity, reflectivity, absorbance, color, electrical conductance, optical phase retardance, roughness, hardness and surface tension, which is affected by the heat treatment within the one or more second laser treated zones (40).

6. Arrangement (1) according to any one of claims 3 to 5, **characterized in that** the electrical conductivity of the coating (12, 22) is modified within at least one of the one or more second laser treated zones (40) to form at least one of

   - an antenna structure (400) suitable for receiving and/or transmitting RF signals or suitable for wireless charging,
   - a heating structure,
   - an electrode structure for detecting or creating an electric field,
   - electrical pathways on the first and/or the second substrate.

7. Arrangement (1) according to any one of claims 3 to 5, **characterized in that** the coating (12, 22) is an optical reflective coating or anti-reflective coating for visible light, near infrared light and/or UV light and wherein the reflectivity of the coating is modified within at least one of the one or more second laser treated zones (40) in order to form at least one of

   - a non-reflecting area or reflective area,
   - an alignment structure or fiducial,
   - a diffraction grating structure,
   - a label,
   - a barcode or a QR-code.

8. Arrangement (1) according to any one of claims 1 to 7, **characterized in that** the coating (12, 22) has been selectively removed by selectively melting portions the first substrate (10) or the second substrate (20) in one or more third laser treatment zones (50), wherein no mixing of material of the first substrate (10) and second substrate (20) has occurred.

9. Arrangement (1) according to any one of claims 1 to 8, wherein the coating (12, 22) of the first substrate (10) and/or second substrate (20) is a single layer or a multi-layer structure, the single layer or at least one layer of the coating being configured as an inorganic layer, preferably selected from a metal layer, a nitride layer, or an oxide layer.

10. Arrangement (1) according to any one of claims 1 to 9, **characterized in that** an inner coating (26) is arranged on inner walls not facing towards the interface between the first substrate (10) and second substrate (20), in particular on sidewalls of a cavity (500), and wherein the inner coating (26) is preferably light absorbing or light reflecting.

11. Arrangement (1) according to any one of claims 1 to 10, **characterized in that** the first substrate (10) is configured as a cover substrate and the second substrate (20) is configured as a base substrate, the two substrates forming an enclosure for a cavity (500) or a function zone, or
    that the arrangement (1) additionally comprises a further substrate (10'), wherein the first substrate (10) is configured as a cover substrate, the second substrate (20) is configured as an intermediate substrate and the further substrate (10') is configured as a bottom substrate, the three substrates forming an enclosure for a cavity (500) or a function zone.

12. Arrangement (1) according to any one of claims 1 to 11, **characterized in that** the first laser treated zone (30) surrounds a cavity (500) or a function zone, wherein a bond between the first substrate (10) and second substrate (20) formed within the first laser treated zone (30) is hermetic.

13. Arrangement (1) according to any one of claims 1 to 12, **characterized in that** the first substrate (10) and/or, if present, the further substrate (10'), is selected from a glass, a glass-ceramic, silicon, and an inorganic crystal, such as sapphire or diamond, and/or
    that the second substrate (20) is selected from a glass, in particular a volume absorbing glass, a glass-ceramic, silicon, an inorganic crystal such as sapphire or diamond, a metal or a metal alloy and a plastic material.

14. Method for manufacturing an arrangement (1) of at least two connected substrates (10, 20, 10'), comprising the steps of

> - providing a first substrate (10) and a second substrate (20) and forming a substrate stack, wherein at least one of the first substrate (10) and the second substrate (20) has a coating (12, 22) arranged on a side facing towards an interface between the first substrate (10) and second substrate (20);
> - forming a first laser treated zone (30) for bonding the first substrate (10) and the second substrate (20) by means of laser welding, wherein at least the first substrate (10) is transparent for the laser, and wherein the coating (12, 22), before laser treatment, has an absorption for the welding laser light of less than 10%, and wherein the first laser treated zone is formed by introducing at least one laser weld line (100), wherein in the first laser treated zone (30) material of the first substrate (10) and second substrate (20) is melted and mixed to bond the first substrate (10) and the second substrate (20) together;

> optionally forming a second laser treated zone (40) to selectively heat treat the coating (12, 22), wherein a property of the coating (12, 22) is modified and/or forming a third laser treated zone (50) to selectively remove the coating, wherein no mixing of material of the first substrate (10) and second substrate (20) occurs.

15. Method according to claim 14, wherein the method is used to produce an arrangement (1) according to any one of claims 1 to 13, wherein the defined wavelength range comprises the wavelength of the welding laser.

16. Method according to claim 14 or 15, wherein the coating (12, 22) is selected such that the coating (12, 22) changes color when heat treated, the method further comprising an examination step, where weld line interruptions (130) and/or weld line inhomogeneities (132) in the at least one laser weld line (100) are identified by detecting the color change of heat treated coating (12, 22) or the presence of untreated coating (12, 22) along the intended laser weld line (100) or

wherein the coating (12, 22) is selected such that electrical conductivity changes when heat treated, the method further comprising an examination step where weld line interruptions (130) and/or weld line inhomogeneities (132) in the at least one laser weld line (100) are identified by measuring the electrical resistance between the coating (12, 22) within an inner zone or functional zone and a part of the coating (12, 22) outside of said zone.

17. Use of an arrangement (1) according to any one of claims 1 to 13 or produced according to the method according to claim 14 to 16, as an enclosure or as a cap for a medical implant or a sensor.

Fig. 1

Fig. 2

Fig. 3

Fig. 4

Fig. 5

Fig. 6

Fig. 7

Fig. 8

## Fig. 9

## Fig. 10

Fig. 11

Fig. 12

Fig. 13

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

**EP 23 15 9639**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/406672 A1 (THOMAS JENS ULRICH [DE] ET AL) 22 December 2022 (2022-12-22) | 1-10, 12-17 | INV.<br>C03C17/06 |
| Y | * claims 1, 2, 4 * | 11 | B23K26/00<br>C03B23/20 |
| X | WO 2022/096724 A2 (SCHOTT AG [DE]) 12 May 2022 (2022-05-12) | 1-6,9, 10,12-17 | C03C17/22<br>C03C17/23 |
| Y | * claims 1,31 * | 11 | C03C17/34<br>C03C23/00 |
| Y | US 2022/241897 A1 (THOMAS JENS ULRICH [DE] ET AL) 4 August 2022 (2022-08-04) | 11 | C03C27/00 |
| A | * figure 19 * | 1-10, 12-17 | |

-----

TECHNICAL FIELDS
SEARCHED      (IPC)

C03C
C03B
B23K

### INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

**see sheet C**

| Place of search | Date of completion of the search | Examiner |
|---|---|---|
| Munich | 6 October 2023 | Saldamli, Saltuk |

EPO FORM 1503 03.82 (P04E07)

Europäisches
Patentamt

European
Patent Office

Office européen
des brevets

INCOMPLETE SEARCH
SHEET C

Application Number

EP 23 15 9639

Claim(s) completely searchable:
        –


Claim(s) searched incompletely:
        1-17

Reason for the limitation of the search:

1       A clarification request under Rule 63 has been issued on
28.07.2023, asking the applicant to indicate the subject-matter to be
searched (for substantiation see the clarification request).
        With letter of 20.09.2023 the applicant replied to the
clarification request, without making any indication, and with arguments
disputing the assessment of the search division. The key points of the
applicant are as follows:
        – The features of a claim must be seen in relation to each
other and the entire disclosure of the application should be used to
interpret the claims,
        – Transparent means transmissive within the defined wavelength
range so that a laser welding process is enabled,
        – Interpretation is to be found on page 3 last full paragraph,
page 4 last full paragraph, page 14 last full paragraph, claim 14, page
15, fourth and fifth paragraphs.
        – The feature concerning the absorption of the coating can
easily be measured and verified,
        – Transparency of the first substrate and the absorption of the
coating are to be interpreted in a combined manner,
        – Defined wavelength range must be suitable to perform a
welding process as in claim 14,
        – Claim 1 only requires an overlap between the range of
wavelengths for which the first substrate is transparent / transmissive
and the range of wavelengths for which the absorption of the coating is
less than 10%.
        – Terms in claim 14 may be interpreted in the same manner as for
claim 1.
2       The arguments of the applicant are not convincing for the
following reasons:
        Firstly, the wording of a claim should be clear as such (GL F-IV
4.2). Transparent is a relative term and open to broad interpretation
without further quantification and qualification of transparence.
        Secondly, the raised objection with respect to clarity is not
based on separate analysis of the features in claim 1. The objection is
rather based on how many choices and permutations a skilled person have
to go through, so that the scope of the claim can be established. As
indicated in the previous communication, there are so many permutations
to be made, in order to match the transparence wavelength range of a
first substrate to the absorption wavelength range of a coating, in which
the coating absorbs not more than 10% in the range of transparence of the
substrate.
        Moreover, claim 1 does not necessarily require an overlap of a
wavelength range; there is no explicit mention thereof in claim 1. In
fact, "within the defined wavelength" implies all three possibilities:
substrate wavelength range is broader; i.e. it contains the coating
wavelength range, coating wavelength range is broader; i.e. it contains

Europäisches
Patentamt

European
Patent Office

Office européen
des brevets

**INCOMPLETE SEARCH
SHEET C**

Application Number

EP 23 15 9639

the substrate wavelength range, or the two ranges overlap. Besides, none of the three possibilities help the skilled person in any way to facilitate the experimentation, so that defining of the claim scope is not an undue burden.

Last but not least, the reply of the applicant actually confirms that the skilled person must refer to the description in order to establish limitations and find where the invention lies, since the scope of claims 1 and 14 are far broader than justified by the description.

3 The search division thus concludes that a meaningful search on the subject-matter of claims 1 and 14 cannot be carried out.

The subject-matter to be searched has been limited in that said light is laser radiation, which is used for welding and feature "... the coating on the first substrate and/or second substrate has, before laser treatment, an absorption for light within the defined wavelength range of less than 10 %." is deemed implicit, unless it is explicitly stated in the prior art, that the coating absorbs more than 10 % of the laser radiation (for example, as in US 2015/027168 A1, which has been cited in the application).

## ANNEX TO THE EUROPEAN SEARCH REPORT
## ON EUROPEAN PATENT APPLICATION NO.

EP 23 15 9639

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2023

| Patent document cited in search report | | Publication date | Patent family member(s) | | Publication date |
|---|---|---|---|---|---|
| US 2022406672 | A1 | 22-12-2022 | AU | 2021223713 A1 | 08-09-2022 |
| | | | CN | 115135595 A | 30-09-2022 |
| | | | DE | 102020104613 A1 | 26-08-2021 |
| | | | EP | 4107119 A1 | 28-12-2022 |
| | | | JP | 2023513958 A | 04-04-2023 |
| | | | US | 2022406672 A1 | 22-12-2022 |
| | | | WO | 2021165478 A1 | 26-08-2021 |
| WO 2022096724 | A2 | 12-05-2022 | AU | 2021373322 A1 | 22-06-2023 |
| | | | CN | 116420224 A | 11-07-2023 |
| | | | EP | 4241301 A2 | 13-09-2023 |
| | | | WO | 2022096724 A2 | 12-05-2022 |
| US 2022241897 | A1 | 04-08-2022 | AU | 2020371187 A1 | 07-04-2022 |
| | | | CN | 114599474 A | 07-06-2022 |
| | | | EP | 3812352 A1 | 28-04-2021 |
| | | | EP | 4048643 A1 | 31-08-2022 |
| | | | JP | 2022554060 A | 28-12-2022 |
| | | | US | 2022241897 A1 | 04-08-2022 |
| | | | WO | 2021078731 A1 | 29-04-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3012059 B1
- US 2015027168 A1
- EP 3812352 A1